# EUROPEAN PATENT APPLICATION

(11) **EP 0 928 817 A1**
(43) Date of publication of application: **14.07.1999**
(21) Application number: 97121355.8
(22) Date of filing: 04.12.1997
(51) Int. Cl.: C09C 1/00, C09C 1/48, C09C 1/50

(54) **Method for manufacturing carbon black**

(71) Applicant: Alcyon S.A., 1763 Granges-Paccot (CH)
(72) Inventor: Affolter, Jean, 1162 Saint-Prex (CH); Bovey, Richard, 1093 La Conversion (CH); Vuille, Jean-Pierre, 1020 Renens (CH)
(74) Representative: Misrachi, Alfred

(57) **Abstract**

The method provides for pyrolysis of rubber products and/or scrap tyres to yield a non condensable fraction of combustible gas, oil, and a carbonaceous solid residue. The oil is used as a feed stock for making the carbon black. The carbonaceous solid residue is converted to combustible gas containing carbon monoxide and hydrogen, and the combustible gas resulting from the conversion of the carbonaceous solid residue is used as a fuel to support the reaction producing the carbon black.

## Description

This invention relates to the manufacture of carbon black by pyrolysis of rubber products and/or scrap tyres to yield a non condensable fraction of combustible gas, oil, and a carbonaceous solid residue.

Carbon black is mainly used by tyre manufacturers and rubber product manufacturers.

The pyrolysis of rubber products and/or scrap tyres at temperature ranging from 300° to 900°C is state of the art. The rubber products and/or tyres are usually shredded to crumbs which are introduced in a reactor which is flushed with an inert gas or which is operated at reduced pressure via use of a vacuum pump. The reactor is either pre-heated to the process temperature or gradually heated up. The pyrolysis yields a non condensable fraction of combustible gas, oil, and a carbonaceous solid residue. This residue contains mainly the carbon black mixture added to the rubber used for manufacturing the rubber products and/or tyres, the balance of mass being made of graphite resulting from the pyrolysis of cords, some zinc oxide, steel threads, and mineral material. The ratio of oil to gas may vary whereas the amount of carbonaceous residue remains fairly constant. The pyrolysis gas amounts 5 to 50% depending on the pyrolysis temperature, it has a low combustion value in the range of 25'000 kJ/kg, and it cannot be condensed at ambient temperature; at best, it can be used on the site of the plant, but it cannot be transported economically; such a gas has therefore little commercial value. The oil does not correlate to any specified API (American Petroleum Institute) grades, and it faces accordingly a limited market; the refineries accept it as a crude oil at a reduced price. Some attempts have been made for isolating specific chemicals found in the oil, such as for example dipentene, however, here again, the economy sets limits as the recovery cost makes the product more expensive than the market price. The carbonaceous solid residue contains only about 70% carbon black, whereby it is not accepted as genuine carbon black by the rubber or tyre industry. The tyre industry rejects it as it does not sufficiently reinforce the rubber, reinforcement being one of the main properties required from the carbon black, and post-treatments of the product do not significantly improve its quality while substantially raising its cost. Accordingly, pyrolysis plants for scrap tyres and rubber products do not attract investors because no valuable commercial application of the products obtained from the pyrolysis has been found so far.

It is an object of this invention to provide a method for manufacturing carbon black which is highly economical and environmentally valuable.

To this effect, the invention complies with the definitions given in the claims.

Accordingly, the invention makes use of products obtained from the pyrolysis of rubber products and/or scrap tyres and turns them into a product with a market value.

The oil is used as a feed stock for the production of genuine carbon black whereas the carbonaceous solid residue converted to combustible gas is used as a fuel for sustaining the carbon black producing reaction.

Preferably, the known furnace black process is used for making the carbon black.

The oil obtained from the pyrolysis of rubber products and/or scrap tyres has a low BMCI (Bureau of Mines Correlation Index) grade whereby the yield of carbon black is low, as compared to the same process trimming using a feed stock with a high BMCI. However, the yield of carbon black can be improved by using more fuel. The amount of fuel according to the invention, i.e., the combustible gas resulting from conversion of the carbonaceous solid residue, is by far larger than requested for sustaining the carbon black producing reaction. As such fuel is free and plentiful, a higher need of fuel has no adverse effect on the economy of the process. Therefore, the carbon black produced in accordance with the invention is economically competitive and the product meets the market prices.

As the carbonaceous solid residue is not used directly as a fuel but converted to combustible gas, any of the numerous coal gasification processes may be used wherein coal reacts with steam at temperature in the range of 600°C to 1200°C, the reaction products being mainly carbon monoxide, hydrogen and methane. The combustible gas yielded by the coal gasification is used in the carbon black producing reactor for sustaining the reaction.

It has been found that most of the grades described in the ASTM-D-1765 (American Society for Testing and Materials) can be produced by the invention. As the rubber products manufacturers and tyre manufacturers rely on the ASTM-D-1765 specification for purchasing the carbon black, the product obtained by the process according to the invention meets the requirements of the largest carbon black users.

## Claims

1. A method for manufacturing carbon black by pyrolysis of rubber products and/or scrap tyres to yield a non condensable fraction of combustible gas, oil, and a carbonaceous solid residue, characterized by the steps of using said oil as a feed stock for making the carbon black, converting said carbonaceous solid residue to combustible gas containing carbon monoxide and hydrogen, and using said combustible gas resulting from conversion of said carbonaceous solid residue as a fuel to support reaction producing the carbon black.

2. A method according to claim 1 ,wherein said conversion of said carbonaceous solid residue to combustible gas is achieved by coal gasification wherein coal reacts with steam at temperature between 600°C and 1200°.

3. A method according to claim 1 or claim 2, wherein the carbon black is made by the furnace black process.
